# EUROPÄISCHE PATENTANMELDUNG

(11) **EP 4 346 079 A1**
(43) Veröffentlichungstag der Anmeldung: **03.04.2024**
(21) Anmeldenummer: 22199190.4
(22) Anmeldetag: 30.09.2022
(51) Int. Cl.: H02M 7/483, H02M 1/00

(54) **MODULARER MULTILEVEL-STROMRICHTER ZUR SPEISUNG MEHRERER WICKLUNGSSYSTEME**

(71) Anmelder: Siemens Aktiengesellschaft, 80333 München (DE)
(72) Erfinder: Gaudenz, Markus Matthias, 91056 Erlangen (DE)
(74) Vertreter: Siemens Patent Attorneys

(57) **Zusammenfassung**

Die Erfindung betrifft einen modularen Multilevel-Stromrichter (1) mit mindestens einem Phasenmodul (2), wobei das Phasenmodul (2) zwischen einem ersten Zwischenkreisanschluss (11) und einem zweiten Zwischenkreisanschluss (12) angeordnet ist. Zur Verbesserung des modularen Multilevel-Stromrichters (1) wird vorgeschlagen, dass das Phasenmodul (2) einen ersten Phasenanschluss (21) und einen zweiten Phasenanschluss (22) aufweist, wobei zwischen dem ersten Phasenanschluss (21) und dem ersten Zwischenkreisanschluss (11) eine erste Anzahl an Submodulen (3) in einer ersten Reihenschaltung (23) angeordnet ist, wobei zwischen dem zweiten Phasenanschluss (22) und dem zweiten Zwischenkreisanschluss (12) eine zweite Anzahl an Submodulen (3) in einer zweiten Reihenschaltung (24) angeordnet ist, wobei zwischen dem ersten Phasenanschluss (21) und dem zweiten Phasenanschluss (22) eine dritte Anzahl an Submodulen (3) in einer dritten Reihenschaltung (25) angeordnet ist, wobei die dritte Anzahl kleiner ist als die erste Anzahl und kleiner ist als die zweite Anzahl. Weiter betrifft die Erfindung eine Antriebseinheit (10), aufweisend einen derartigen modularen Multilevel-Stromrichter (1) und mindestens zwei Wicklungssystem (4) für eine elektrische Maschine (5), wobei die Anzahl der Phasen (40) der Wicklungssystem (4) der Anzahl der Phasenmodule (4) des modularen Multilevel-Stromrichters (1) entspricht. Die Erfindung betrifft ferner ein Verfahren zur Steuerung oder Regelung eines derartigen modularen Multilevel-Stromrichters (1) oder einer derartigen Antriebseinheit (10).

## Beschreibung

Die Erfindung betrifft einen modularen Multilevel-Stromrichter mit mindestens einem Phasenmodul, wobei das Phasenmodul zwischen einem ersten Zwischenkreisanschluss und einem zweiten Zwischenkreisanschluss angeordnet ist. Weiter betrifft die Erfindung eine Antriebseinheit, aufweisend einen derartigen modularen Multilevel-Stromrichter und mindestens zwei Wicklungssysteme für eine elektrische Maschine. Die Erfindung betrifft ferner ein Verfahren zur Steuerung oder Regelung eines derartigen modularen Multilevel-Stromrichters oder einer derartigen Antriebseinheit.

Der modulare Multilevel-Stromrichter ist aus der DE 101 03 031 bekannt. Er ist zur Umformung von elektrischer Energie zwischen einer Gleichspannungsseite und Phasenanschlüssen einer Wechselspannungsseite vorgesehen und eignet sich im Besonderen für Mittelspannungs- und Hochspannungsanwendungen. Durch seinen modularen Aufbau kann er auf einfache Weise an Anforderungen bezüglich Spannung und Leistung angepasst werden. Dieser modulare Multilevel-Stromrichter kommt beispielsweise in Antriebsanwendungen mit einer elektrischen Maschine zum Einsatz. Für jeden Anschluss der elektrischen Maschine ist ein Phasenmodul des modularen Multilevel-Stromrichters vorgesehen. Beispielsweise sind bei einem modularen Stromrichter für einen Motor mit zwei dreiphasigen Wicklungssystemen sechs Phasenmodule vorgesehen.

Der Erfindung liegt die Aufgabe zugrunde einen modularen Multilevel-Stromrichter zu verbessern.

Diese Aufgabe wird durch einen modularen Multilevel-Stromrichter mit mindestens einem Phasenmodul gelöst, wobei das Phasenmodul zwischen einem ersten Zwischenkreisanschluss und einem zweiten Zwischenkreisanschluss angeordnet ist, wobei das Phasenmodul einen ersten Phasenanschluss und einen zweiten Phasenanschluss aufweist, wobei zwischen dem ersten Phasenanschluss und dem ersten Zwischenkreisanschluss eine erste Anzahl an Submodulen in einer ersten Reihenschaltung angeordnet ist, wobei zwischen dem zweiten Phasenanschluss und dem zweiten Zwischenkreisanschluss eine zweite Anzahl an Submodulen in einer zweiten Reihenschaltung angeordnet ist, wobei zwischen dem ersten Phasenanschluss und dem zweiten Phasenanschluss eine dritte Anzahl an Submodulen in einer dritten Reihenschaltung angeordnet ist, wobei die dritte Anzahl kleiner ist als die erste Anzahl und kleiner ist als die zweite Anzahl. Weiter wird diese Aufgabe durch eine Antriebseinheit, aufweisend einen derartigen modularen Multilevel-Stromrichter und mindestens zwei Wicklungssysteme für eine elektrische Maschine gelöst, wobei die Anzahl der Phasen der Wicklungssysteme der Anzahl der Phasenmodule des modularen Multilevel-Stromrichters entspricht, wobei ein erstes Wicklungssystem der zwei Wicklungssysteme mit den ersten Phasenanschlüssen der Phasenmodule elektrisch verbunden ist und ein zweites Wicklungssystem der zwei Wicklungssysteme mit den zweiten Phasenanschlüssen der Phasenmodule elektrisch verbunden ist, wobei die Wicklungssysteme miteinander gekoppelt sind. Diese Aufgabe wird ferner durch ein Verfahren zur Steuerung oder Regelung eines derartigen modularen Multilevel-Stromrichters oder einer derartigen Antriebseinheit gelöst, wobei an den ersten Phasenanschlüssen der Phasenmodule ein erstes Spannungssystem erzeugt wird und an den zweiten Phasenanschlüssen der Phasenmodule ein zweites Spannungssystem erzeugt wird, wobei zur Steuerung der Leistungsaufteilung zwischen den ersten Phasenanschlüsse und den zweiten Phasenanschlüssen ein Phasenwinkel zwischen dem ersten Spannungssystem und dem zweiten Spannungssystem verändert wird.

Weitere vorteilhafte Ausgestaltungen der Erfindung sind in den abhängigen Ansprüchen angegeben.

Der Erfindung liegt unter anderem die Erkenntnis zugrunde, dass die Anzahl der Submodule sich dadurch reduzieren lässt, wenn die jeweiligen Phasenmodule mehr als einen Phasenanschluss, beispielsweise zwei Phasenanschlüsse, aufweisen. Dabei wird die erste Anzahl an Submodulen der ersten Reihenschaltung und die zweite Anzahl an Submodulen der zweiten Reihenschaltung so ausgelegt, als hätte das Phasenmodul nur einen Phasenanschluss. Da der erste Phasenanschluss und der zweite Phasenanschluss im Allgemeinen unterschiedliche elektrische Potentiale aufweisen können, sind auch zwischen diesen Phasenanschlüssen eine dritte Anzahl an Submodulen in einer Reihenschaltung angeordnet.

Der modulare Multilevel-Stromrichter ist vorzugsweise dreiphasig ausgestaltet. Er weist dann genau drei Phasenmodule auf. Er kann dann für die Speisung von dreiphasigen elektrischen Maschinen genutzt werden. Dies sind beispielsweise Drehstrommotoren und Drehstromgeneratoren. Zudem ist das Nullsystem in dreiphasigen Netzen auf einfache Weise erzeugbar und anwendbar.

Als Submodule können alle bereits bekannten Submodule zur Anwendung kommen. Beispielsweise können die Submodule oder ein Teil der Submodule als Halbbrückenmodul ausgebildet sein. Ein Halbbrückenmodul weist zwei Halbleiterschalter und einen Kondensator auf. Die Halbleiterschalter ermöglichen es, die Spannung Null oder die Kondensatorspannung an den Anschlüssen des Submoduls anliegen zu haben. Es handelt sich hierbei um ein unipolares Submodul, da an den Anschlüssen nur eine Spannung mit einer Polarität erzeugt werden kann. Das Doppelbrückenmodul ist ebenfalls ein unipolares Submodul, dass jedoch zusätzlich Spannungen mit unterschiedlicher Höhe an den Anschlüssen erzeugen kann. Unipolare Submodule bieten sich für die Submodule der ersten und zweiten Reihenschaltung an, da die Spannung über diese Reihenschaltung im Betrieb keinen Wechsel des Vorzeichens erfährt.

Ebenso ist der Einsatz eines Vollbrückenmoduls möglich. Ein Vollbrückenmodul weist vier Halbleiterschalter und einen Kondensator auf. Die Halbleiterschalter ermöglichen es, die Spannung Null, die positive Kondensatorspannung oder die negative Kondensatorspannung an den Anschlüssen des Submoduls anliegen zu haben. Es handelt sich hierbei um ein bipolares Submodul, da an den Anschlüssen eine Spannung mit beiden Polaritäten erzeugt werden kann.

Für die Submodule der dritten Reihenschaltung kann sowohl ein Einsatz von unipolaren als auch von bipolaren Submodulen sinnvoll sein wie in einem der folgenden Absätze näher beschrieben wird.

Für einen kostengünstigen und zuverlässigen Aufbau des modularen Multilevel-Stromrichters hat es sich als vorteilhaft erwiesen, die Submodule der ersten Reihenschaltung und der zweiten Reihenschaltung baugleich auszuführen. Auch die erste Anzahl an Submodulen entspricht vorteilhafterweise der zweiten Anzahl an Submodulen.

Die dritte Anzahl der Submodule der dritten Reihenschaltung ist dabei abhängig von der Spannung, die maximal zwischen dem ersten Phasenanschluss und dem zweiten Phasenanschluss des Phasenmoduls auftreten kann.

Durch die Kopplung des ersten Wicklungssystems mit dem zweiten Wicklungssystems kann sichergestellt werden, dass die Spannungen zwischen dem ersten Phasenanschluss und dem zweiten Phasenanschluss eines Phasenmoduls einen bestimmten Wert nicht überschreiten. Somit ist die dritte Anzahl der Submodule der dritten Reihenschaltung kleiner als die erste Anzahl der Submodule der ersten Reihenschaltung und auch kleiner als die zweite Anzahl der Submodule der zweiten Reihenschaltung.

Eine Kopplung kann beispielsweise dadurch entstehen, dass die beiden Wicklungssystem in einer elektrischen Maschine angeordnet sind und zusammen ein elektrisches Feld in der Maschine erzeugen. Dann handelt es sich bei den zwei Wicklungssystemen um Wicklungen einer elektrischen Maschine. Durch die mechanische Anordnung weisen die zwei Wicklungssysteme einen Winkel β zueinander auf. Je kleiner der Winkel β ist, desto kleiner ist auch die Spannung zwischen den beiden Phasenanschlüssen eines Phasenmoduls. Somit kann dann auch die dritte Anzahl an Submodulen der dritten Reihenschaltung geringer gewählt werden.

Bei einer Phase des Wicklungssystems kann es sich neben einer herkömmlichen Motorwicklung auch um einen einzelnen Stab, beispielsweise einem Läuferstab, des Motors handeln. Jeder einzelne Stab kann dann eine Phasenwicklung des Wicklungssystems darstellen. Damit ist es auch möglich, einzelne Stäbe oder eine Gruppe von Stäben des Motors direkt mit dem Stromrichter zu verbinden.

Eine alternative Kopplung zu der elektrischen Maschine mit zwei Wicklungssystemen kann dadurch realisiert werden, dass jedes Wicklungssystem Teil einer separaten elektrischen Maschine ist. Die elektrischen Maschinen weisen dann jeweils ein Wicklungssystem auf. Die Kopplung kann über die Welle der elektrischen Maschinen erfolgen, so dass beide elektrische Maschinen immer die gleiche Drehzahl und den gleichen Drehwinkel haben. Auch in diesem Fall weisen die Wicklungssysteme wie bei einer elektrischen Maschine einen Winkel β zwischen den Wicklungssystemen auf. Handelt es sich bei den elektrischen Maschinen um Synchronmotoren so ist der Winkel β aus der Geometrie des Aufbaus fest vorgegeben. Bei einer Asynchronmaschine variiert der Winkel β.

Je kleiner der Winkel β ist, desto geringer ist die Spannung zwischen den Phasenanschlüssen eines Phasenmoduls. Die dritte Reihenschaltung sollte immer mindestens ein Submodul aufweisen, damit auch bei einem Winkel von β=0 die Aufteilung der Leistung auf die beiden Phasenanschlüsse gesteuert oder geregelt werden kann. Nur dadurch ist ein Phasenwinkel α zwischen dem ersten Spannungssystem und dem zweiten Spannungssystem erzeugbar.

Idealerweise ist die Leistungsaufteilung bei einem Phasenwinkel von α=β gleich. In diesem Fall haben beispielsweise an dem modularen Multilevel-Stromrichter angeschlossene Synchronmaschinen den gleichen Polradwinkel. Aufgrund von Unsymmetrien oder anderen Effekten kann die Leistungsaufteilung von einer Gleichverteilung abweichen. In diesem Fall wird der Phasenwinkel α verändert und es verändert sich damit auch die Leistungsaufteilung zwischen den ersten und den zweiten Phasenanschlüssen des modularen Multilevel-Stromrichters.

Bei einer vorteilhaften Ausgestaltung der Erfindung sind die Submodule der ersten Reihenschaltung, die Submodule der zweiten Reihenschaltung und die Submodule der dritten Reihenschaltung als unipolare Submodule, insbesondere als Halbbrückenmodule, ausgebildet. Durch die Verwendung der gleichen Submodule für den gesamten modularen Multilevel-Stromrichter kann der Stromrichter besonders einfach und kostengünstig aufgebaut werden. Auch eine Steuereinrichtung zur Ansteuerung der Submodule kann einfach und modular aufgebaut sein, da sich die Submodule weder vom Aufbau noch in ihrer Funktion unterscheiden.

Da die unipolaren Submodule nur eine Polarität in der Spannung erzeugen können, kann eine Spannung zwischen dem ersten Phasenanschluss und dem zweiten Phasenanschluss seine Polarität nicht ändern. Um dies sicherzustellen, wird mindestens einem der erzeugten Spannungssystemen, also dem ersten Spannungssystem oder dem zweiten Spannungssystem, ein Nullsystem derart überlagert, dass die Spannung zwischen dem ersten und dem zweiten Phasenanschluss aller Phasenmodule keinen Polaritätswechsel aufweisen. Ein derartiges Nullsystem kann auch beiden Spannungssystemen überlagert werden.

Bei einer weiteren vorteilhaften Ausgestaltung der Erfindung sind die Submodule der ersten Reihenschaltung und die Submodule der zweiten Reihenschaltung als unipolare Submodule, insbesondere als Halbbrückenmodule, ausgebildet sind, wobei die Submodule der dritten Reihenschaltung als bipolare Submodule, insbesondere als Vollbrückenmodule, ausgestaltet sind. Da zwischen dem ersten Phasenanschluss und dem zweiten Phasenanschluss bipolare Submodule angeordnet sind, kann die Spannung zwischen dem ersten Phasenanschluss und dem zweiten Phasenanschluss ihr Vorzeichen wechseln. Beispielsweise können als bipolare Submodule Vollbrückenmodule zur Anwendung kommen. Somit kann auf ein Nullsystem verzichtet werden, das eine Umkehr der Spannung zwischen dem ersten Phasenanschluss und dem zweiten Phasenanschluss des Phasenmoduls verhindert. Der Freiheitsgrad des Nullsystems kann dann dazu genutzt werden, die Ausgangsspannung im Verhältnis zur Zwischenkreisspannung weiter zu erhöhen. Dadurch lässt sich die Leistungsfähigkeit des modularen Multilevel-Stromrichters durch eine vergleichsweise geringe Anzahl an bipolaren Submodulen deutlich erhöhen.

Im Folgenden wird die Erfindung anhand der in den Figuren dargestellten Ausführungsbeispiele näher beschrieben und erläutert. Es zeigen:
- FIG 1 bis 3: einen modularen Multilevel-Stromrichter und
- FIG 4 bis 7: eine Antriebseinheit.

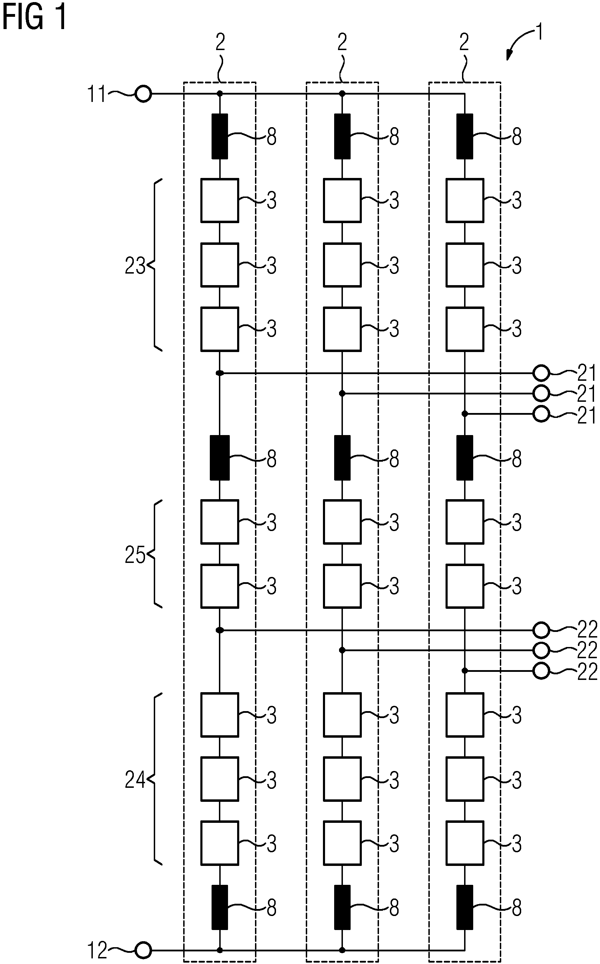

FIG 1 zeigt einen modularen Multilevel-Stromrichter 1. Dieser modulare Multilevel-Stromrichter 1 weist drei Phasenmodule 2 auf. Damit kann der modulare Multilevel-Stromrichter 1 sowohl an den ersten Phasenanschlüssen 21 als auch an den zweiten Phasenanschlüssen 22 jeweils ein dreiphasiges Spannungssystem, insbesondere ein Drehspannungssystem, erzeugen. Die Phasenmodule 2 sind zwischen einem ersten Zwischenkreisanschluss 11 und einem zweiten Zwischenkreisanschluss 12 angeordnet. Zwischen dem ersten Zwischenkreisanschluss 11 und dem zweiten Zwischenkreisanschluss 12 liegt im Betrieb des modularen Multilevel-Stromrichters 1 eine Gleichspannung an, die auch als Zwischenkreisspannung bezeichnet wird. Die Phasenmodule 2 weisen jeweils drei Reihenschaltungen 23, 24, 25 von Submodulen 3 auf. Eine erste Reihenschaltung 23 ist dabei zwischen dem ersten Zwischenkreisanschluss 11 und dem ersten Phasenanschluss 21 angeordnet. Eine zweite Reihenschaltung 24 ist dabei zwischen dem zweiten Zwischenkreisanschluss 12 und dem zweiten Phasenanschluss 22 angeordnet. Eine dritte Reihenschaltung 23 ist dabei zwischen dem ersten Phasenanschluss 21 und dem zweiten Phasenanschluss 22 angeordnet. Zur Verbesserung der Regel- und Steuereigenschaften hat es sich als vorteilhaft erwiesen, in Reihe zu den jeweiligen Reihenschaltungen eine Induktivität 8 anzuordnen.

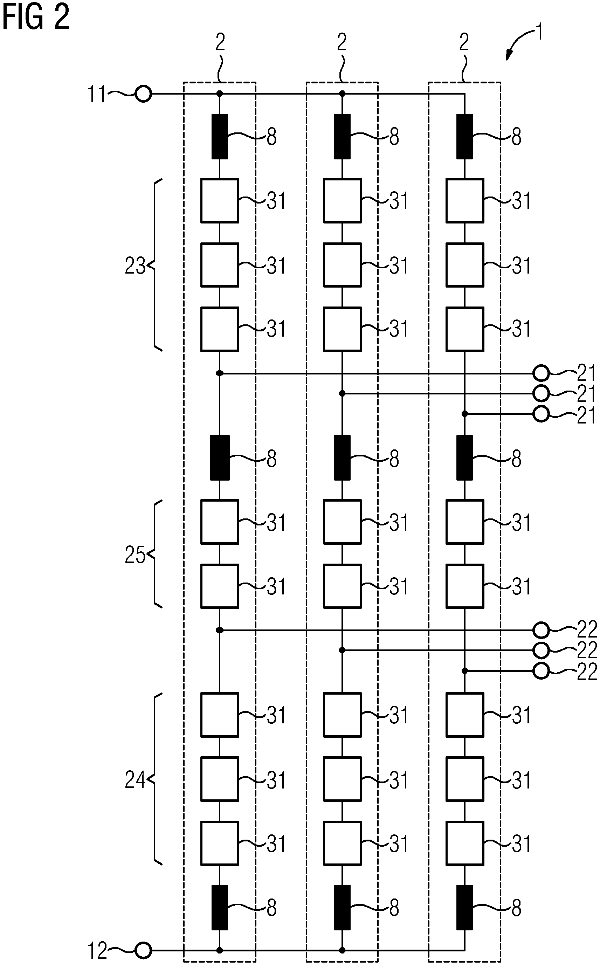

FIG 2 zeigt ein weiteres Ausführungsbeispiel eines vorgeschlagenen modularen Multilevel-Stromrichters 1. Zur Vermeidung von Wiederholungen wird auf die Beschreibung zu der FIG 1 sowie auf die dort eingeführten Bezugszeichen verwiesen. In diesem Ausführungsbeispiel sind alle Submodule 3 als unipolare Submodule 31 ausgebildet. In diesem Fall kann die Spannung zwischen dem ersten Phasenanschluss 21 und dem zweiten Phasenanschluss 22 der jeweiligen Phasenmodule 2 nur eine Polarität annehmen. Um einen Vorzeichenwechsel der Spannung zu vermeiden, wird an den ersten Phasenanschlüssen 21 und/oder an den zweiten Phasenanschlüssen 22 ein Spannungssystem erzeugt, dass ein Nullsystem aufweist und damit eine Änderung der Polarität in der Spannung zwischen dem ersten Phasenanschluss 21 und dem zweiten Phasenanschluss 22 verhindert.

Dieser Aufbau erhöht die Anzahl der Gleichteile und vereinfacht die Regelung und Steuerung eines derartigen modularen Multilevel-Stromrichters 1. Gleichzeitig ist dieser aufgrund der hohen Anzahl an Gleichteilen kostengünstig herstellbar und weist eine hohe Zuverlässigkeit auf.

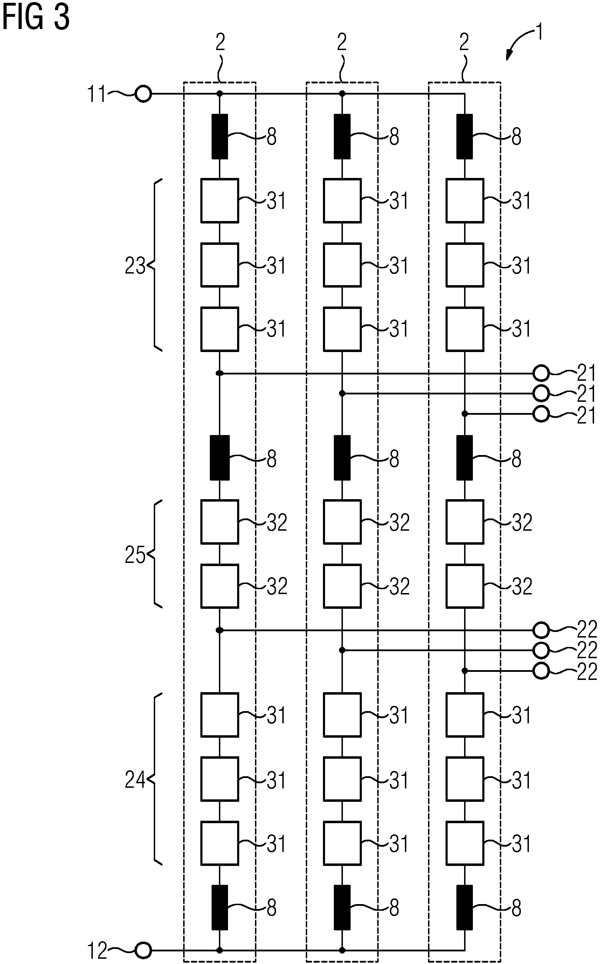

FIG 3 zeigt ein weiteres Ausführungsbeispiel eines vorgeschlagenen modularen Multilevel-Stromrichters 1. Zur Vermeidung von Wiederholungen wird auf die Beschreibung zu den Figuren 1 und 2 sowie auf die dort eingeführten Bezugszeichen verwiesen. In der ersten Reihenschaltung 23 und in der zweiten Reihenschaltung 24 weist auch dieser modulare Multilevel-Stromrichter 1 unipolare Submodule 31 auf. Jedoch weist die dritte Reihenschaltung 25 bipolare Submodule 32 auf. Diese erlauben es, dass die Spannung zwischen dem ersten Phasenanschluss 21 und dem zweiten Phasenanschluss 22 der jeweiligen Phasenmodule 2 unterschiedliche Polaritäten annehmen können. Auf ein Nullsystem kann daher zur Sicherstellung nur einer Polarität in der Spannung zwischen dem ersten Phasenanschluss 21 und dem zweiten Phasenanschluss 22 verzichtet werden. Somit kann der Freiheitsgrad des Nullsystems dazu genutzt werden, die Ausgangsspannungen des modularen Multilevel-Stromrichters 1 weiter zu erhöhen. Damit kann ein besonders leistungsfähiger modularer Stromrichter realisiert werden.

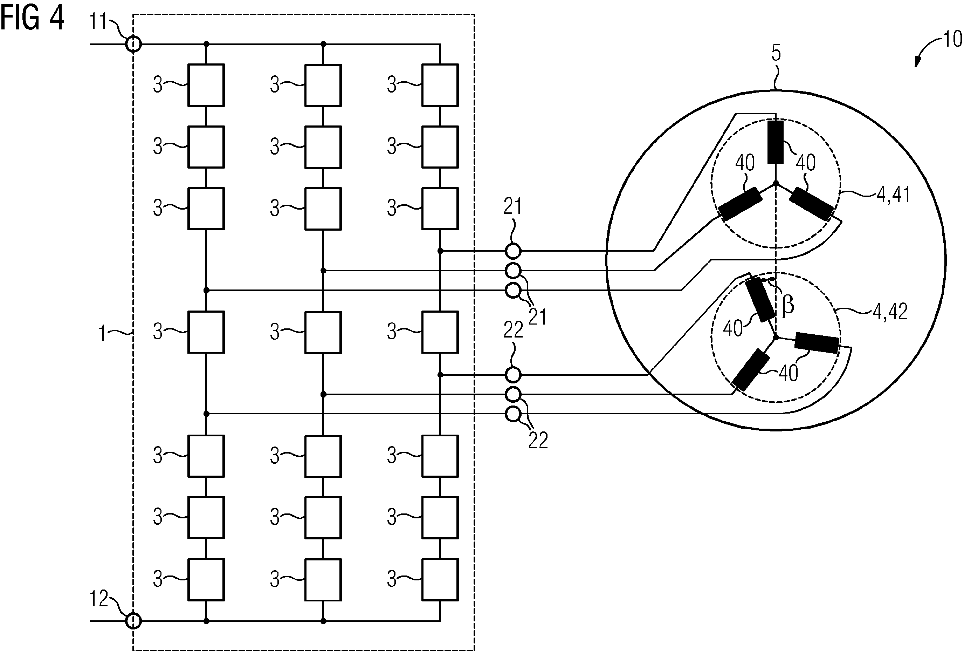

FIG 4 zeigt eine Antriebseinheit 10 mit einem modularen Multilevel-Stromrichter 1 und einer elektrischen Maschine 5. Der modulare Multilevel-Stromrichter 1 kann nach einer der Figuren 1 bis 3 ausgebildet sein und ist hier nur noch vereinfacht dargestellt. Die elektrische Maschine 5 weist zwei dreiphasige Wicklungssysteme 4 auf. Ein dreiphasiges Wicklungssystem weist drei Phasenwicklungen 40 auf. Dabei ist ein erstes Wicklungssystem 41 der zwei Wicklungssysteme 4 mit den ersten Phasenanschlüssen 21 des modularen Multilevel-Stromrichters 1 verbunden. Ein zweites Wicklungssystem 42 der zwei Wicklungssysteme 4 ist mit den zweiten Phasenanschlüssen 22 des modularen Multilevel-Stromrichters 1 verbunden. Das zweite Wicklungssystem 42 weist gegenüber dem ersten Wicklungssystem 41 einen Winkel β auf, der schematisch in der FIG 4 dargestellt und von der Anordnung der Wicklungen im der elektrischen Maschine 5 abhängt.

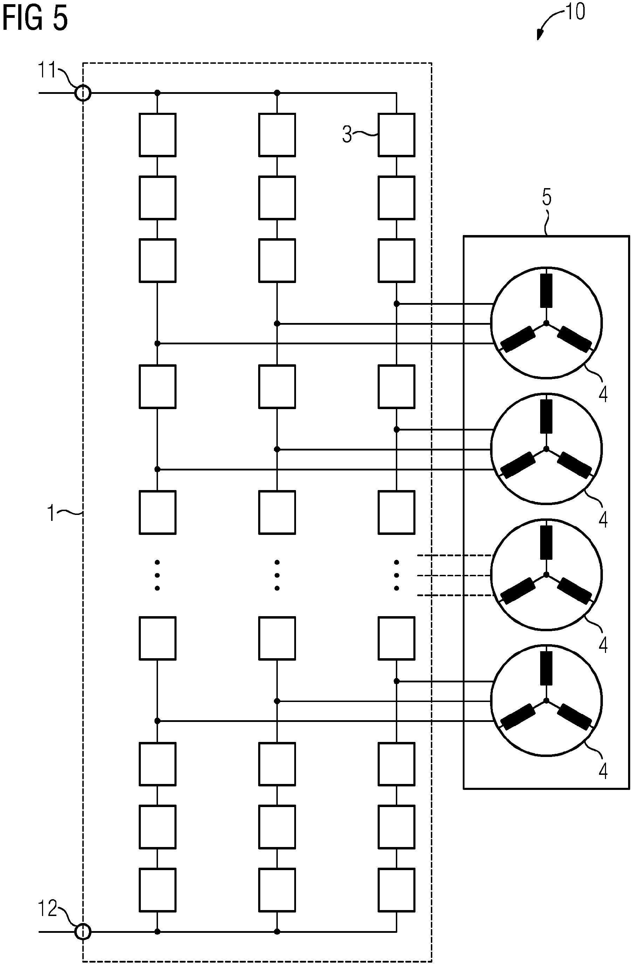

FIG 5 zeigt, dass die elektrische Maschine 5 auch mehr als zwei Wicklungssystem 4 aufweisen kann. Jedes dieser Wicklungssysteme 4 wird über eigene Phasenanschlüsse des modularen Multilevel-Stromrichters 1 gespeist. Der modulare Multilevel-Stromrichter 1 ist durch weitere Reihenschaltungen von Submodulen 3 um weitere Phasenanschlüsse auf einfache und modulare Weise erweiterbar. Es ist möglich, dass jeder Stab, beispielsweise jeder Läuferstab, der elektrischen Maschine 5 eine Phasenwicklung 40 des Wicklungssystems 4 darstellt. Dadurch weist die elektrische Maschine 5 eine Vielzahl von Wicklungssystemen 4 auf.

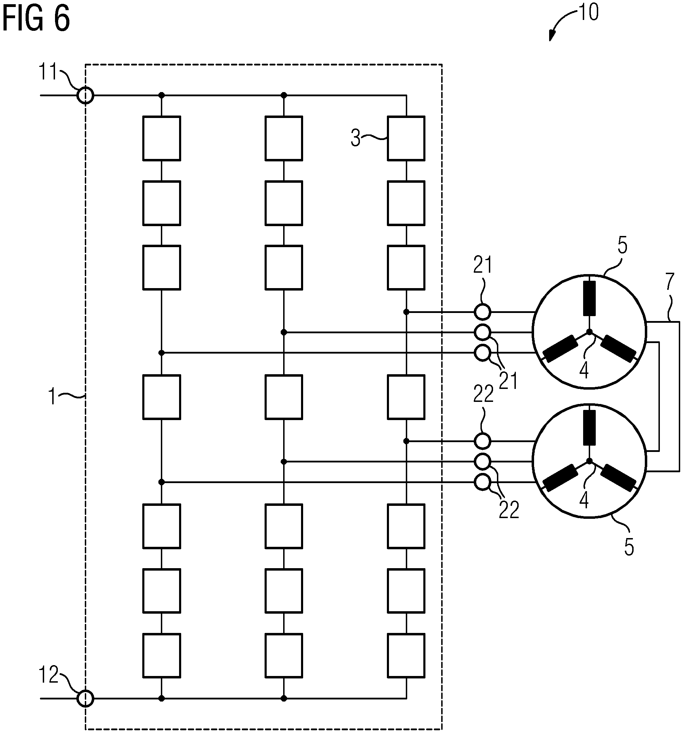

FIG 6 zeigt eine Antriebseinheit 10 mit zwei elektrischen Maschinen 5. Jede dieser elektrischen Maschinen 5 weist jeweils ein Wicklungssystem 4 auf. Die Kopplung der Wicklungssysteme 4 erfolgt über eine mechanische Kopplung 7 über die Wellen der elektrischen Maschinen 5.

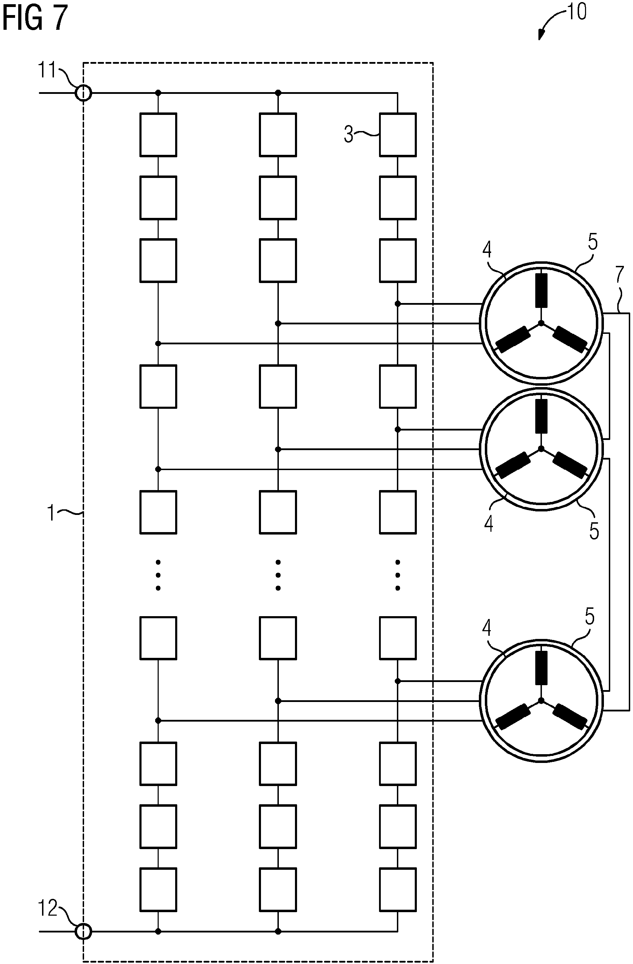

FIG 7 zeigt, dass auch eine Vielzahl von elektrischen Maschinen 5 mit jeweils einem Wicklungssystem 4 von nur einem modularen Multilevel-Stromrichter 1 gespeist werden können.

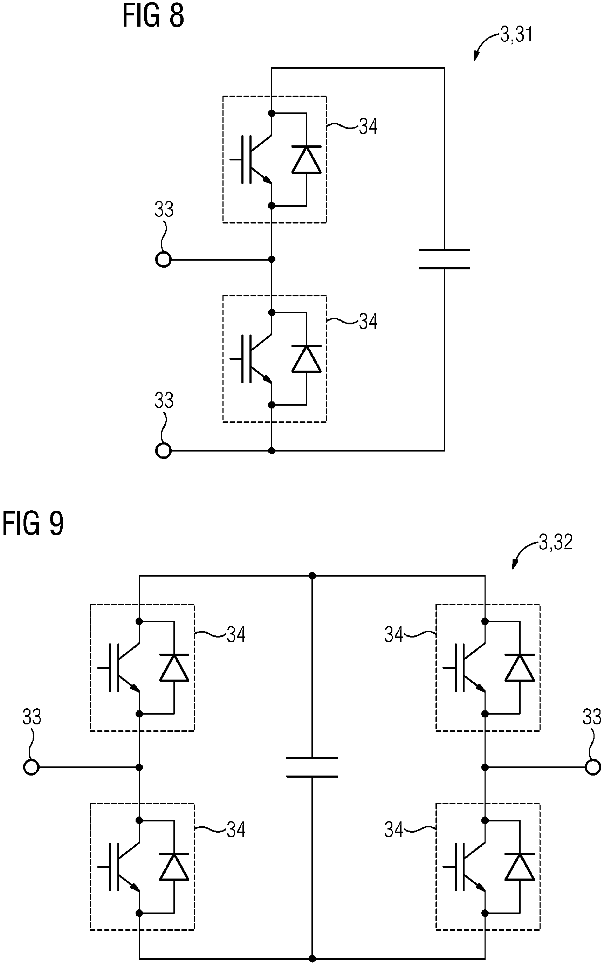

FIG 8 zeigt ein Submodul 3, das als Halbbrückenmodul ausgebildet ist. Durch Schalthandlungen der Halbleiterschalter 34 ist an den Anschlüssen 33 des Halbbrückenmoduls die Spannung null oder die Kondensatorspannung erzeugbar. Es handelt sich somit um eine Ausgestaltung eines unipolaren Submoduls 31.

FIG 9 zeigt ein Submodul 3, das als Vollbrückenmodul ausgebildet ist. Durch Schalthandlungen der Halbleiterschalter 34 ist an den Anschlüssen 33 des Halbbrückenmoduls die Spannung null, die positive Kondensatorspannung oder die negative Kondensatorspannung erzeugbar. Es handelt sich somit um eine Ausgestaltung eines bipolaren Submoduls 32.

Zusammenfassend betrifft die Erfindung einen modularen Multilevel-Stromrichter 1 mit mindestens einem Phasenmodul 2, wobei das Phasenmodul 2 zwischen einem ersten Zwischenkreisanschluss 11 und einem zweiten Zwischenkreisanschluss 12 angeordnet ist. Zur Verbesserung des modularen Multilevel-Stromrichters 1 wird vorgeschlagen, dass das Phasenmodul 2 einen ersten Phasenanschluss 21 und einen zweiten Phasenanschluss 22 aufweist, wobei zwischen dem ersten Phasenanschluss 21 und dem ersten Zwischenkreisanschluss 11 eine erste Anzahl an Submodulen 3 in einer ersten Reihenschaltung 23 angeordnet ist, wobei zwischen dem zweiten Phasenanschluss 22 und dem zweiten Zwischenkreisanschluss 12 eine zweite Anzahl an Submodulen 3 in einer zweiten Reihenschaltung 24 angeordnet ist, wobei zwischen dem ersten Phasenanschluss 21 und dem zweiten Phasenanschluss 22 eine dritte Anzahl an Submodulen 3 in einer dritten Reihenschaltung 25 angeordnet ist, wobei die dritte Anzahl kleiner ist als die erste Anzahl und kleiner ist als die zweite Anzahl. Weiter betrifft die Erfindung eine Antriebseinheit 10, aufweisend einen derartigen modularen Multilevel-Stromrichter 1 und mindestens zwei Wicklungssysteme 4 für eine elektrische Maschine 5, wobei die Anzahl der Phasen 40 der Wicklungssysteme 4 der Anzahl der Phasenmodule 4 des modularen Multilevel-Stromrichters 1 entspricht. Die Erfindung betrifft ferner ein Verfahren zur Steuerung oder Regelung eines derartigen modularen Multilevel-Stromrichters 1 oder einer derartigen Antriebseinheit 10.

## Patentansprüche

1. Modularer Multilevel-Stromrichter (1) mit mindestens einem Phasenmodul (2), wobei das Phasenmodul (2) zwischen einem ersten Zwischenkreisanschluss (11) und einem zweiten Zwischenkreisanschluss (12) angeordnet ist, wobei das Phasenmodul (2) einen ersten Phasenanschluss (21) und einen zweiten Phasenanschluss (22) aufweist, wobei zwischen dem ersten Phasenanschluss (21) und dem ersten Zwischenkreisanschluss (11) eine erste Anzahl an Submodulen (3) in einer ersten Reihenschaltung (23) angeordnet ist, wobei zwischen dem zweiten Phasenanschluss (22) und dem zweiten Zwischenkreisanschluss (12) eine zweite Anzahl an Submodulen (3) in einer zweiten Reihenschaltung (24) angeordnet ist, wobei zwischen dem ersten Phasenanschluss (21) und dem zweiten Phasenanschluss (22) eine dritte Anzahl an Submodulen (3) in einer dritten Reihenschaltung (25) angeordnet ist, wobei die dritte Anzahl kleiner ist als die erste Anzahl und kleiner ist als die zweite Anzahl.

2. Modularer Multilevel-Stromrichter (1) nach Anspruch 1, wobei die Submodule (3) der ersten Reihenschaltung (23), die Submodule (3) der zweiten Reihenschaltung (24) und die Submodule (3) der dritten Reihenschaltung (25) als unipolare Submodule (31), insbesondere als Halbbrückenmodule, ausgebildet sind.

3. Modularer Multilevel-Stromrichter (1) nach Anspruch 1, wobei die Submodule (3) der ersten Reihenschaltung (23) und die Submodule (3) der zweiten Reihenschaltung (24) als unipolare Submodule (31), insbesondere als Halbbrückenmodule, ausgebildet sind, wobei die Submodule (3) der dritten Reihenschaltung (25) als bipolare Submodule (32), insbesondere als Vollbrückenmodule, ausgestaltet sind.

4. Antriebseinheit (10), aufweisend
- einen modularen Multilevel-Stromrichter (1) nach einem der Ansprüche 1 bis 3 und
- mindestens zwei Wicklungssysteme (4) für eine elektrische Maschine (5),
wobei die Anzahl der Phasen (40) der Wicklungssysteme (4) der Anzahl der Phasenmodule (4) des modularen Multilevel-Stromrichters (1) entspricht, wobei ein erstes Wicklungssystem (41) der zwei Wicklungssysteme (4) mit den ersten Phasenanschlüssen (21) der Phasenmodule (2) elektrisch verbunden ist und ein zweites Wicklungssystem (41) der zwei Wicklungssysteme (4) mit den zweiten Phasenanschlüssen (22) der Phasenmodule (2) elektrisch verbunden ist, wobei die Wicklungssysteme (4) miteinander gekoppelt sind.

5. Verfahren zur Steuerung oder Regelung eines modularen Multilevel-Stromrichters (1) nach einem der Ansprüche 1 bis 3 oder einer Antriebseinheit (10) nach Anspruch 4, wobei an den ersten Phasenanschlüssen (21) der Phasenmodule (2) ein erstes Spannungssystem erzeugt wird und an den zweiten Phasenanschlüssen (22) der Phasenmodule (2) ein zweites Spannungssystem erzeugt wird, wobei zur Steuerung der Leistungsaufteilung zwischen den ersten Phasenanschlüsse (21) und den zweiten Phasenanschlüssen (22) ein Phasenwinkel (α) zwischen dem ersten Spannungssystem und dem zweiten Spannungssystem verändert wird.

6. Verfahren nach Anspruch 5, wobei mindestens eines der erzeugten Spannungssysteme ein Nullsystem aufweist.
